# FASCICULE DE BREVET EUROPEEN

(11) **EP 1 527 665 B1**
(45) Date de publication et mention de la délivrance du brevet: **20.02.2013**
(21) Numéro de dépôt: 04292499.3
(22) Date de dépôt: 21.10.2004
(51) Int. Cl.: A01B 29/04, A01B 29/06

(54) **Machine agricole comportant un bâti support tracté et des rouleaux pourvus d'une série de pneumatiques à profil en dôme**
Landwirtschaftliche Maschine mit gezogenem Gestell und Walzen mit gewölbten Reifen
Agricultural machine with towed frame and dome-shaped tire rollers

(30) Priorité: 27.10.2003 FR 0312539
(43) Date de publication de la demande: 04.05.2005
(73) Titulaire: OTICO, 77650 Longueville (FR)
(72) Inventeur: Piou, Denis, 89340 Villeblevin (FR)
(74) Mandataire: Bezault, Jean

(56) Documents cités:
- DE-A- 3 605 975
- DE-A- 3 634 175
- DE-A- 3 734 521
- DE-U- 1 995 748
- FR-A- 2 489 649
- FR-A- 2 799 692

## Description

L'invention concerne une machine agricole du type comportant un ou plusieurs rouleaux munis chacun d'une série de pneumatiques enfilés sur un tube horizontal, ces pneumatiques présentant un profil en dôme permettant de créer dans la terre des sillons pour y semer des graines ou repiquer des plants.

Un rouleau de ce type est connu, par exemple, par la publication FR-A-2 763 779 au nom de la demanderesse, qui décrit en détail les pneumatiques utilisables à cet effet, qui sont des pneumatiques du type semi-creux, non gonflés, présentant une section telle que la partie de roulement, à profil en dôme, ne s'affaisse pas trop sous l'effort tout en possédant une souplesse suffisante pour lui permettre de subir des déformations.

Ce type de rouleau agricole est utilisable en particulier avec un semoir, pour former dans la terre des sillons destinés à recevoir des graines de semences. Ces rouleaux peuvent être également utilisés pour appuyer de nouveau le sol après semis. Ils peuvent être utilisés seuls ou en combinaison, non seulement avec un semoir mais avec d'autres outils, par exemple de préparation du sol.

Jusqu'à présent, ces rouleaux ont été conçus uniquement pour travailler en champ. Pour le déplacement de la machine sur route, le rouleau doit être porté pour que ses pneumatiques ne roulent pas sur la route, ce qui provoquerait une usure rapide. A cet effet le rouleau, ou la machine qui le comporte, est équipé de roues porteuses escamotables entre une position de travail, où le rouleau repose librement sur le sol, et une position de route, où le rouleau est supporté au-dessus du niveau du sol (voir p.ex. DE 3634175).

L'invention vise essentiellement à proposer une machine agricole semi-portée, comportant plusieurs rouleaux équipés de leurs pneumatiques, qui puisse à la fois travailler en champ, pour créer des sillons dans le sol, et rouler sur route sans qu'il soit nécessaire de le relever, et donc en faisant l'économie des roues porteuses escamotables ou systèmes analogues ainsi que des moyens de commande de ces roues porteuses (actionneur, verrou, etc.)

Elle vise encore à proposer une machine de ce type qui permet d'assurer un pas sensiblement entre les dômes des pneumatiques d'un rouleau, mais aussi dans l'intervalle qui sépare deux rouleaux alignés.

L'invention telle que revendiquée propose à cet effet une machine agricole du type décrit par la publication FR-A-2 763 279 précitée, c'est à dire comportant des rouleaux et un bâti support tracté, chaque rouleau comportant au moins un tube monté en rotation autour d'un axe horizontal sur des paliers ou moyeux reliés au bâti support, chaque tube étant pourvu d'une série de pneumatiques enfilés sur ce tube et présentant des profils circonférentiels en dôme aptes à former dans la terre une série de sillons parallèles.

Selon l'invention, la machine comprend un nombre déterminé de paires de rouleaux reliées respectivement au bâti support de la machine par une pièce de liaison. La pièce de liaison de chaque paire de rouleaux est adaptée pour permettre aux rouleaux de s'incliner librement autour d'un premier axe de roulis YY' perpendiculaire et coplanaire avec l'axe longitudinal XX' des rouleaux et autour d'un deuxième axe HH' parallèle à l'axe de tangage du bâti, quelles que soient les déformations de la chaussée ou du terrain rencontrées.

Dans une forme de réalisation avantageuse, chaque rouleau comprend un tube central monté sur un moyeu à l'extrémité d'un essieu d'axe longitudinal XX' et autour duquel sont enfilés une série de pneumatiques identiques et l'essieu est rendu solidaire du bâti support par l'intermédiaire d'une jambe de traction fixée par une de ses extrémités au milieu de l'essieu et engagée par son autre extrémité dans un palier à butée de la pièce de liaison.

La pièce de liaison de chaque paire de rouleaux a de préférence la forme d'une potence comportant un montant et une traverse placée en équerre et est articulée au niveau de l'intersection du montant et de la traverse autour d'un axe d'articulation HH' parallèle à l'axe de tangage du bâti et la jambe de traction est articulée par son extrémité engagée dans le palier à butée de la pièce de liaison, autour d'un axe YY' de roulis perpendiculaire et coplanaire avec l'axe XX' de l'essieu.

De préférence le palier à butée est fixé sur le montant de la potence à son extrémité opposée à celle commune avec la traverse.

La jambe de traction de chaque paire de rouleaux est mise en rotation autour de l'axe de roulis YY' par deux vérins disposés symétriquement en appui respectivement aux extrémités d'une barre d'appui fixée en son milieu à l'extrémité opposée à celle qui est fixée à l'essieu et orientée dans une direction parallèle à celle de l'axe XX' de l'essieu et les extrémités opposées des vérins à celles en appui sur la barre d'appui sont fixées à une deuxième barre d'appui solidaire des premières et deuxième branches parallèles et orientée suivant une direction parallèle au deuxième axe d'articulation HH'.

De façon avantageuse, un amortisseur peut être interposé entre l'extrémité libre de la traverse et le bâti pour amortir les mouvements de la pièce de liaison autour du deuxième axe d'articulation HH'.

Pour satisfaire la législation sur le transport routier les moyeux sont équipés de freins à tambour ou à disque.

De préférence les pneumatiques sont maintenus entre deux flasques d'extrémité assurant le maintien et le serrage de la série de pneumatiques. Ces flasques sont démontables pour pouvoir monter ou remplacer les pneumatiques. Un disque transversal est fixé perpendiculairement à la paroi intérieure de chacun des tubes par des goussets pour assurer la fixation de chaque tube sur respectivement deux moyeux fixés aux extrémités de l'essieu.

Dans la description qui suit faite seulement à titre d'exemple, on se réfère aux dessins annexés sur lesquels:
- la figure 1 est vue de face, avec arrachement, d'un premier mode de réalisation d'un dispositif d'assemblage d'une paire de rouleaux selon l'invention ;
- la figure 2 est une vue en coupe de profil du dispositif d'assemblage de la figure 1 ;
- la figure 3 est une vue partielle en coupe du dispositif de la figure 1 en vue de dessus ;
- la figure 4 est une vue analogue à celle de la figure 1 dans laquelle la paire de rouleaux est dans une position inclinée par rapport au plan horizontal du châssis ;
- la figure 5 est une vue montrant un mode d'assemblage de deux paires de rouleaux selon l'invention ;
- les figures 6, 7, 8 montrent différentes attitudes prises par les rouleaux du mode d'assemblage de la figure 5 pour des géométries de sol ou de routes différentes ; et
- la figure 9 est un schéma de principe d'une machine agricole selon l'invention comportant un dispositif de repliement des paires de rouleaux pour le transport sur route.

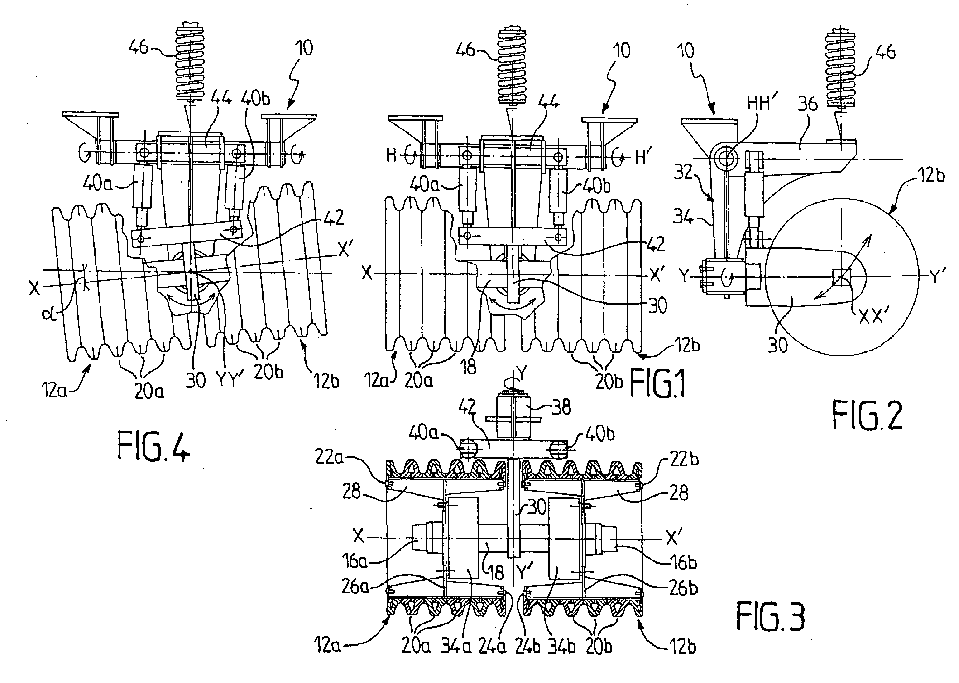

On se réfère tout d'abord aux figures 1, 2 et 3, qui représentent un bâti de machine agricole 10 sur lequel sont montés deux rouleaux 12a et 12b, par exemple des rouleaux pour semoir, d'axe longitudinal XX'. Chaque rouleau comprend un tube central respectivement 14a, 14b, monté sur un moyeu 16a,16b à l'extrémité d'un essieu 18. Une série de pneumatiques identiques 20a, 20b est enfilé autour de chaque tube central. Les pneumatiques 20a, 20b ont un profil circonférentiel en dôme qui permet aux rouleaux de former des sillons à la surface du sol, et ils sont empilés de façon jointive les uns contre les autres et maintenus entre deux flasques d'extrémité 22a, 24a et 22b, 24b assurant le maintien et le serrage de la série de pneumatiques (Figure 3).

Les flasques 22a, 24a et 22b, 24b sont démontables pour pouvoir monter ou remplacer les pneumatiques. Ils peuvent en outre être munis d'ergots (non représentés) aptes à s'engager dans des évidements appropriés des pneumatiques d'extrémité afin de bloquer en rotation les pneumatiques par rapport aux tubes 14a, 14b.

Un disque transversal 26a, 26b est fixé perpendiculairement à la paroi intérieure de chacun des tubes 14a, 14b afin d'assurer la fixation de chaque tube 14a, 14b sur respectivement les deux moyeux 16a, 16b montés aux extrémités de l'essieu 18.

Pour assurer une bonne rigidité à la fixation de chacun des tubes 14a, 14b sur son moyeu 16a, 16b, des goussets radiaux 28 sont disposés de part et d'autre de chacun des disques 26a, 26b et sont fixés par tout moyen connu, entre les surfaces de chacun des disques 26a, 26b et les parois intérieures des tubes 14a, 14b.

L'essieu 18 est rendu solidaire du bâti support par l'intermédiaire d'une jambe de traction 30 fixée par une de ses extrémités au milieu de l'essieu 18 et d'une pièce de liaison 32.

Le déplacement du bâti support 10 entraîne, par réaction des pneumatiques 20a, 20b sur le sol, la rotation des rouleaux 12a, 12b menés de sorte que les pneus, grâce à leur profil en dôme, créent dans le sol des sillons parallèles entre eux, sillons dans lesquels pourront par exemple être semées des graines.

Selon l'invention, la machine qui vient d'être décrite est adaptée pour pouvoir non seulement travailler en champ, mais également rouler sur route, les pneumatiques restant en contact avec la chaussée.

A cet effet, les moyeux 16a, 16b sont équipés de freins 34a, 34b à tambour ou à disque et la pièce de liaison 32 est adaptée pour permettre aux rouleaux 12a, 12b de s'incliner librement d'un angle de plus ou moins α (figure 4) autour d'un premier axe d'articulation YY' perpendiculaire à l'axe longitudinal des rouleaux 12a, 12b et autour d'un deuxième axe d'articulation HH'de direction parallèle à l'axe de tangage du bâti et perpendiculaire à celle du premier axe d'articulation YY', afin de permettre aux rouleaux 12a, 12b de rester en contact avec le sol quelles que soient les déformations de la chaussée ou du terrain à ensemencer rencontrées.

Pour ce faire, la pièce de liaison 32 a la forme d'une potence comportant un montant vertical 34 et une traverse 36 placée en équerre. La pièce de liaison 32 est articulée au niveau de l'intersection du montant 34 et de la traverse 36 autour du deuxième axe d'articulation HH' parallèle à l'axe de tangage du bâti 10.

La jambe de traction est fixée par une de ses extrémités au milieu de l'essieu 18 et est engagée par son autre extrémité dans un palier à butée 38 de la pièce de liaison 32 disposé à l'extrémité du montant 34 opposée à celle commune au montant 34 et à la traverse 36, ce qui lui permet de tourner autour du premier axe d'articulation YY'.

La jambe de traction 30 est mise en rotation autour du premier axe d'articulation YY' sous la poussée de deux vérins 40a, 40b de type pneumatique ou hydraulique, à simple ou double effet, disposés symétriquement en appui respectivement aux extrémités d'une barre d'appui 42 fixée en son milieu à l'extrémité de la jambe de traction 30 opposée à celle qui est fixée à l'essieu 18 et orientée dans une direction parallèle à celle de l'axe longitudinal XX' des rouleaux 12a, 12b.

Les extrémités des vérins 40a, 40b opposées à celles en appui sur la barre d'appui 42 sont fixées à une deuxième barre d'appui 44 solidaire de la traverse 36 et orientée suivant une direction parallèle au deuxième axe d'articulation HH'.

Un amortisseur 46 est interposé entre l'extrémité libre de la traverse 36 et le bâti 10.

Les représentations des figures 1 à 3 correspondent à une configuration de la machine qui est utilisable plus particulièrement pour les semis sur des terrains présentant peu d'irrégularités ce qui est généralement le cas lorsque les terrains ont été correctement préparés avant de recevoir les semis. Dans cette configuration les vérins 40a et 40b sont bloqués et présentent une même élongation.

Mais cette configuration ne convient généralement plus pour le transport sur route car elle ne permet pas aux rouleaux 12a, 12b de s'adapter aux irrégularités de la chaussée du fait que l'axe XX' reste constamment parallèle à l'axe HH'. Dans ce cas, le contact des pneumatiques sur une chaussée présentant des déformations n'est pas régulier tout le long des rouleaux et il peut s'en suivre une usure non régulière ou prématurée des pneumatiques.

Pour le transport routier il est alors préférable de libérer les vérins 40a, 40b. Comme montré sur la figure 4 où les éléments homologues à ceux des figures 1 à 3 portent les mêmes références, la libération des vérins 40a, 40b permet à l'axe longitudinal XX' des rouleaux 12a, 12b de prendre différentes inclinaisons d'angle de plus ou moins α relativement au deuxième axe d'articulation HH'en tournant autour du premier axe de référence YY',en fonction des irrégularités de la chaussée. Dans ce cas les vérins 40a, 40b n'ont plus qu'un rôle d'amortisseur analogue à celui de l'amortisseur 46 interposé entre l'extrémité libre de la traverse 36 et le bâti 10.

Selon une autre variante de l'invention, il est possible d'augmenter la largeur des semis en fixant au châssis plusieurs ensemble à paires de rouleaux du type de celui représenté aux figures 1 à 4, côte à côte.

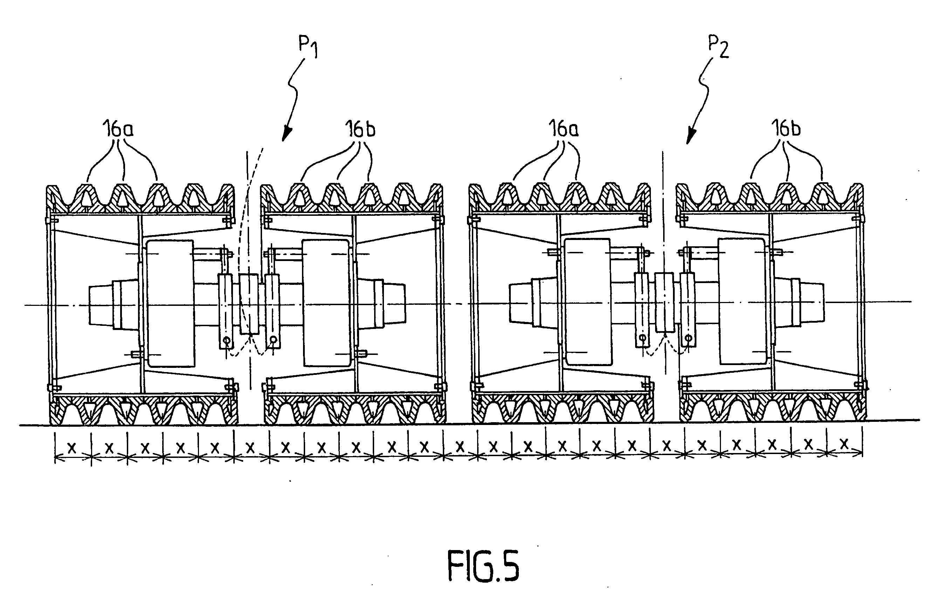

Dans l'exemple des figures 5 à 8 qui montrent différentes configurations prises par un ensemble composé d'ensemble comprenant deux paires de rouleaux P1,P2 identiques à ceux des figures 1 à 4, la figure 5 est une configuration de semis pour laquelle la machine évolue sur un terrain relativement plan. Dans ce cas les axes XX' de chaque paire de rouleaux sont alignés et la machine évolue avec ses vérins bloqués. L'écart entre deux paires de rouleaux P1, P2 et entre les rouleaux 16a, 16b d'une paire est déterminé égal au pas X des profils circonférentiels en dôme des rouleaux afin d'assurer un travail régulier du sol sans laisser apparaître d'espace de continuité plane entre deux sillons adjacents creusés par deux paires de rouleaux.

A titre d'exemple la longueur de chaque rouleau pourra être fixée égale à 0,70 mètre avec un pas X des profils circonférentiels en dôme des rouleaux compris, par exemple, entre 100 mm et 200 mm. Pour un pas de 125 mm, cela correspond dans un exemple de réalisation comportant deux paires de rouleaux de rouleaux à une longueur totale des rouleaux d'environ 3 mètres.

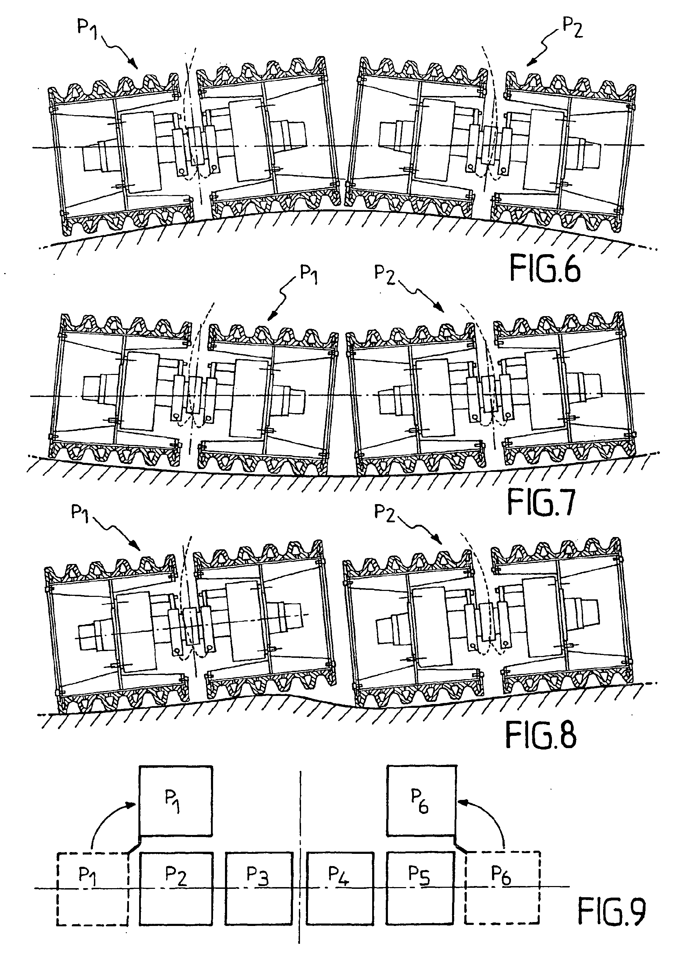

Les figures 6 à 8 correspondent à des configurations de transport sur route de la machine à deux paires de rouleaux P1, P2 de la figure 5 . Dans ces cas la machine évolue avec les vérins 40a,40b de chaque paire de rouleaux débloqués ce qui permet à chaque paire de rouleaux de s'adapter au profil de la chaussée.

Sur les figure 6 et 7 on voit que sur une chaussée bombée à profil concave ou convexe les deux paires de rouleaux s'adaptent au profil de la chaussée en s'écartant l'une de l'autre en pivotant chacune autour de leur axe de roulis dans des sens de rotation opposés.

Sur la figure 8 qui correspond à une configuration de chaussée déformée sur laquelle la machine roule sur deux chemins de roulement relevés sur un de leur côté et s'étendant sur des plans parallèles différents, chaque chemin de roulement étant emprunté par une seule paire de rouleaux, on voit que les deux paires de rouleaux s'adaptent au profil de la chaussée en tournant respectivement d'un même angle α autour de leur axe YY' de roulis et en s'inclinant différemment autour du deuxième axe d'articulation HH'.

Il est clair que l'adaptation des pneumatiques au profil de la chaussée peut être améliorée en diminuant la longueur des rouleaux et en augmentant leur nombre. Cependant à cause du gabarit routier ce nombre ne peut être augmenté au delà d'une limite imposée par ce gabarit sauf à prévoir certains aménagements comme illustré par l'exemple de la figure 9 qui prévoit de replier vers le haut les paires de rouleaux situés aux deux extrémités de l'ensemble des paires de rouleaux autour d'une charnière fixé au bâti 10 permettant à la machine de rentrer dans ce gabarit. Ce procédé à naturellement pour avantage de pouvoir augmenter la largeur du terrain ensemencé à chaque passe de la machine. Eventuellement il est possible d'envisager d'augmenter cette largeur en augmentant encore le nombre de paires de rouleaux repliés.

## Revendications

1. Machine agricole comportant un bâti support (10) et plusieurs rouleaux (12a, 12b) reliés au bâti support (10), l'un au moins des rouleaux (12a, 12b) étant relié au bâti support par une pièce de liaison (32) pour lui permettre de s'incliner librement autour d'au moins un axe d'articulation,
**caractérisée en ce qu'**elle comprend un nombre déterminé de paires de rouleaux (12a, 12b) reliées respectivement au bâti support (10) de la machine par une pièce de liaison (32), et **en ce que** la pièce de liaison (32) de chaque paire de rouleaux est adaptée pour permettre aux rouleaux (12a, 12b) de s'incliner librement autour d'un premier axe de roulis (YY') perpendiculaire et coplanaire avec l'axe longitudinal (XX') des rouleaux et autour d'un deuxième axe (HH') parallèle à l'axe de tangage du bâti support (10), quelles que soient les déformations de la chaussée ou du terrain rencontrées, chaque rouleau (12a, 12b) étant muni d'une série de pneumatiques (20a, 20b) enfilés sur un tube (14a, 14b) et présentant des profils circonférentiels respectifs en dôme aptes à former une série de sillons sur le sol.

2. Machine agricole selon la revendication 1, **caractérisée en ce que** chaque tube (14a, 14b) d'une paire de rouleau est monté sur un moyeu (16a, 16b) à l'extrémité d'un essieu (18) d'axe longitudinal confondu avec l'axe longitudinal (XX') des rouleaux (12a, 12b).

3. Machine agricole selon la revendication 2, **caractérisée en ce que** l'essieu (18) de chaque paire de rouleaux est rendu solidaire du bâti support (10) par l'intermédiaire d'une jambe de traction (30) fixée par une de ses extrémités au milieu de l'essieu (18) et engagée par son autre extrémité dans un palier à butée (38) monté sur la pièce de liaison (32).

4. Machine agricole selon la revendication 3, **caractérisée en ce que** la pièce de liaison (32) a la forme d'une potence comportant un montant (34) et une traverse (36) placée en équerre et est articulée au niveau de l'intersection du montant (34) et de la traverse (36) autour d'un axe d'articulation (HH') parallèle à l'axe de tangage du bâti (10) et **en ce que** la jambe de traction (30) est articulée par son extrémité engagée dans le palier à butée (36) de la pièce de liaison (32), autour de l'axe (YY') de roulis perpendiculaire à l'axe longitudinal XX' des rouleaux (12a,12b).

5. Machine agricole selon les revendications 3et 4, **caractérisée en ce que** le palier à butée (38) est fixée sur le montant (34) de la potence (32) à son extrémité opposée à celle commune avec la traverse (36).

6. Machine agricole selon l'une des revendications 4 et 5, **caractérisée en ce que** la jambe de traction (30) est mise en rotation autour du premier axe de roulis (YY') par deux vérins (40a, 40b) disposés symétriquement en appui respectivement aux extrémités d'une barre d'appui (42) fixée en son milieu à l'extrémité opposée à celle qui est fixée à l'essieu (18) et orientée dans une direction parallèle à celle de l'axe longitudinal (XX') des rouleaux (12a, 12b) et **en ce que** les extrémités opposées des vérins (40a, 40b) à celles en appui sur la barre d'appui (42) sont fixées à une deuxième barre d'appui (44) solidaire de la traverse (36) et orientée suivant une direction parallèle au deuxième axe d'articulation (HH').

7. Machine agricole selon l'une des revendications 4 à 6, **caractérisé en ce qu'**elle comprend un amortisseur (46) interposé entre l'extrémité libre de la traverse (36) et le bâti (10).

8. Machine agricole selon l'une des revendications 2 à 7, **caractérisée en ce que** les moyeux (16a, 16b) sont équipés de freins (34a, 34b) à tambour ou à disque.

9. Machine agricole selon l'une des revendications 1 à 8, **caractérisée en ce que** les pneumatiques (20a, 20b) sont maintenus entre deux flasques d'extrémité (22a, 24a ; 24b, 24b) assurant le maintien et le serrage de la série de pneumatiques (20a,20b).

10. Machine agricole selon la revendication 9, **caractérisée en ce que** les flasques (22a, 24a ; 22b, 24b) sont démontables pour pouvoir monter ou remplacer les pneumatiques (20a, 20b).

11. Machine agricole selon l'une des revendications 2 à 10, **caractérisée en ce qu'**elle comprend un disque transversal (26a, 26b) fixé perpendiculairement à la paroi intérieure de chacun des tubes (14a, 14b) pour assurer la fixation de chaque tube (14a, 14b) sur respectivement les deux moyeux (16a, 16b) montés aux extrémités de l'essieu (18).

12. Machine agricole selon la revendication 11, **caractérisée en ce que** des goussets radiaux (28) sont disposés de part et d'autre de chacun des disques (26a, 26b) et sont fixés entre les surfaces de chacun des disques (26a, 26b) et la paroi intérieure de chaque tube (14a, 14b).

13. Machine agricole selon l'une des revendications 1 à 12, **caractérisée en ce que** les paires de rouleaux situés aux deux extrémités de l'ensemble des paires de rouleaux sont repliées autour d'une charnière fixée au bâti (10) lors du transport sur route de la machine.

## Claims

1. Agricultural machine comprising a support frame (10) and several rollers (12a, 12b) connected to the support frame (10), at least one of the rollers (12a, 12b) being connected to the support frame by a linking part (32) to enable said roller to incline freely about at least one articulation axis,
**characterized in that** it comprises a given number of roller pairs (12a, 12b) respectively connected to the support frame (10) of the machine by a linking part (32), and **in that** the linking part (32) of each roller pair is adapted to enable the rollers (12a, 12b) to incline freely about a first roll axis (YY') perpendicular to and coplanar with the longitudinal axis (XX') of the rollers and about a second axis (HH') parallel to the pitch axis of the support frame (10), no matter what road or terrain deformations are encountered, each roller (12a, 12b) being equipped with a set of pneumatic tyres (20a, 20b) engaged on a tube (14a, 14b) and having respective dome-shaped, circumferential profiles able to form a set of furrows in the ground.

2. Agricultural machine according to claim 1, **characterized in that** each tube (14a, 14b) of a roller pair is mounted on a hub (16a, 16b) at the end of an axle (18) having a longitudinal axis coinciding with the longitudinal axis (XX') of the rollers (12a, 12b).

3. Agricultural machine according to claim 2, **characterized in that** the axle (18) of each roller pair is rendered integral with the support frame (10) by a towing leg (30) fixed by one of its ends to the centre of the axle (18) and engaged by its other end in a thrust bearing (38) fitted to the linking part (32).

4. Agricultural machine according to claim 3, **characterized in that** the linking part (32) is shaped like a gallows comprising an upright (34) and a crossbar (36) arranged at right angles and is articulated at the intersection of the upright (34) and the crossbar (36) about an articulation axis (HH') parallel to the pitch axis of the frame (10) and **in that** the towing leg (30) is articulated by its end engaged in the thrust bearing (36) of the linking part (32) about the roll axis (YY') perpendicular to the longitudinal axis (XX') of the rollers (12a, 12b).

5. Agricultural machine according to claims 3 and 4, **characterized in that** the thrust bearing (38) is fixed to the upright (34) of the linking part (32) at its end opposite to that common with the crossbar (36).

6. Agricultural machine according to either of the claims 4 and 5, **characterized in that** the towing leg (30) is rotated about the first roll axis (YY') by two jacks (40a, 40b) arranged symmetrically and respectively bearing at the ends of a supporting bar (42) fixed in its centre at the end opposite to that which is fixed to the axle (18) and oriented in a direction parallel to that of the longitudinal axis (XX') of the rollers (12a, 12b) and **in that** the ends of the jacks (40a, 40b) opposite to those bearing on the supporting bar (42) are fixed to a second supporting bar (44) integral with the crossbar (36) and oriented in a direction parallel to the second articulation axis (HH').

7. Agricultural machine according to one of the claims 4 to 6, **characterized in that** it comprises a shock absorber (46) placed between the free end of the crossbar (36) and the frame (10).

8. Agricultural machine according to one of the claims 2 to 7, **characterized in that** the hubs (16a, 16b) are equipped with drum or disk brakes (34a, 34b).

9. Agricultural machine according to one of the claims 1 to 8, **characterized in that** the pneumatic tyres (20a, 20b) are held between two end flanges (22a, 24a; 22b, 24b) ensuring the holding and securing of the set of tyres (20a, 20b).

10. Agricultural machine according to claim 9, **characterized in that** the flanges (22a, 24a; 22b, 24b) are demountable so as to be able to fit or replace the tyres (20a, 20b).

11. Agricultural machine according to one of the claims 2 to 10, **characterized in that** it comprises a transverse disk (26a, 26b) fixed perpendicular to the inner wall of each of the tubes (14a, 14b) in order to ensure the fixing of each tube (14a, 14b) to respectively the two hubs (16a, 16b) fitted at the ends of the axle (18).

12. Agricultural machine according to claim 11, **characterized in that** radial brackets (28) are positioned on either side of each of the disks (26a, 26b) and are fixed between the surfaces of each of the disks (26a, 26b) and the inner wall of each tube (14a, 14b).

13. Agricultural machine according to one of the claims 1 to 12, **characterized in that** the roller pairs located at the two ends of the roller pair assembly are folded back about a hinge fixed to the frame (10) during road transport of the machine.

## Patentansprüche

1. Landwirtschaftliche Maschine umfassend ein Traggestell (10) und mehrere mit dem Traggestell (10) verbundene Rollen (12a, 12b), wobei zumindest eine der Rollen (12a, 12b) mit dem Traggestell durch ein Verbindungsteil (32) verbunden ist, um dieser zu ermöglichen, sich frei um mindestens eine Gelenkachse zu neigen, **dadurch gekennzeichnet, dass** sie eine bestimmte Anzahl an jeweils mit dem Traggestell (10) der Maschine über ein Verbindungsteil (32) verbundenen Paaren von Rollen (12a, 12b) umfasst, und dass das Verbindungsteil (32) eines jeden Paars von Rollen angepasst ist, um den Rollen zu ermöglichen, sich frei um eine erste, zu der Längsachse (XX') der Rollen rechtwinklige und koplanare Rollachse (YY') und um eine zweite, zur Nickachse des Traggestells (10) parallele Achse (HH') zu neigen, wie auch immer die anzutreffenden Deformationen der Fahrbahn oder des Bodens sind, wobei jede Rolle (12a, 12b) mit einer Reihe von auf ein Rohr (14a, 14b) aufgezogenen Reifen (20a, 20b) ausgestattet ist und jeweilige umlaufende gewölbte Profile aufweist, die geeignet sind, eine Reihe von Ackerfurchen auf dem Boden zu formen.

2. Landwirtschaftliche Maschine nach Anspruch 1, **dadurch gekennzeichnet, dass** jedes Rohr (14a, 14b) von einem Paar von Rollen auf einer Nabe (16a, 16b) an der Extremität einer Achse (18), deren Längsachse mit der Längsachse (XX') der Rollen (12a, 12b) zusammenfällt, montiert ist.

3. Landwirtschaftliche Maschine nach Anspruch 2, **dadurch gekennzeichnet, dass** die Achse (18) von jedem Paar von Rollen mit dem Traggestell (10) mittels eines Zugbeins (30) zusammengehalten wird, das mit einer seiner Extremitäten in der Mitte der Achse (18) befestigt und mit seiner anderen Extremität in einem auf dem Verbindungsteil (32) befestigten Lageranschlag (38) eingesteckt ist.

4. Landwirtschaftliche Maschine nach Anspruch 3, **dadurch gekennzeichnet, dass** das Verbindungsstück (32) in der Form eines Arms einen Ständer (34) und einen im Anschlagwinkel angeordneten Querträger (36) umfasst und hinsichtlich des Schnitts des Ständers (34) und des Querträgers (36) um eine zur Nickachse des Traggestells (10) parallele Gelenkachse (HH') ausgebildet ist und dass das Zugbein (30) mit seiner Extremität in dem Lageranschlag (38) des Verbindungsteils (32) eingesteckt um die zur Längsachse (XX') der Rollen (12a, 12b) rechtwinklige Rollachse (YY') angeordnet ist.

5. Landwirtschaftliche Maschine nach den Ansprüchen 3 und 4, **dadurch gekennzeichnet, dass** der Lageranschlag (38) auf dem Ständer (34) des Arms (32) an seiner Extremität entgegengesetzt derjenigen mit dem Querträger (36) gemeinsamen Extremität befestigt ist.

6. Landwirtschaftliche Maschine nach einem der Ansprüche 4 und 5, **dadurch gekennzeichnet, dass** das Zugbein (30) um die erste Rollachse (YY') durch zwei Zylinder (40a, 40b), die symmetrisch in der Auflage jeweils an den Extremitäten einer Auflage-Stange (42), die in der Mitte an der Extremität entgegengesetzt derjenigen Extremität, die an der Achse (18) befestigt und in einer Richtung parallel zu der der Längsachse (XX') der Rollen (12a, 12b) orientiert ist, angeordnet sind, in Rotation versetzt wird und dass die der Auflage auf der Auflagestange (42) entgegengesetzten Extremitäten der Zylinder (40a, 40b) an einer zweiten mit dem Querträger (36) verbundenen und einer zur zweiten Gelenkachse (HH') parallelen Richtung folgend orientierten Auflagestange (44) befestigt sind.

7. Landwirtschaftliche Maschine nach einem der Ansprüche 4 bis 6, **dadurch gekennzeichnet, dass** sie einen zwischen der freien Extremität des Querträgers (36) und dem Gestell (10) angeordneten Dämpfer (46) umfasst.

8. Landwirtschaftliche Maschine nach einem der Ansprüche 2 bis 7, **dadurch gekennzeichnet, dass** die Naben (16a, 16b) mit Trommel- oder Scheibenbremsen (34a, 34b) ausgerüstet sind.

9. Landwirtschaftliche Maschine nach einem der Ansprüche 1 bis 8, **dadurch gekennzeichnet, dass** die Reifen (20a, 20b) zwischen zwei die Aufrechterhaltung und die Einspannung der Reihe der Reifen (20a, 20b) sichernden äußeren Flanschen (22a, 24a, 22b, 24b) gehalten sind.

10. Landwirtschaftliche Maschine nach Anspruch 9, **dadurch gekennzeichnet, dass** die Flansche (22a, 24a; 22b, 24b) demontierbar sind, um die Reifen (20a, 20b) zu montieren oder austauschen zu können.

11. Landwirtschaftliche Maschine nach einem der Ansprüche 2 bis 10, **dadurch gekennzeichnet, dass** sie eine Querscheibe (26a, 26b) umfasst, die rechtwinklig an der Innenwand von jedem der Rohre (14a, 14b) befestigt ist, um die Befestigung von jedem Rohr (14a, 14b) jeweils auf den zwei an den Extremitäten der Achse (18) montierten Naben (16a, 16b), zu gewährleisten.

12. Landwirtschaftliche Maschine nach Anspruch 11, **dadurch gekennzeichnet, dass** radiale Taschen (28) auf beiden Seiten von jeder der Scheiben (26a, 26b) angeordnet und zwischen den Oberflächen von jeder der Scheiben (26a, 26b) und der Innenwand von jedem der Rohre (14a, 14b) festgelegt sind.

13. Landwirtschaftliche Maschine nach einem der Ansprüche 1 bis 12, **dadurch gekennzeichnet, dass** die an den beiden Extremitäten der Zusammenstellung der Paare von Rollen angeordneten Paare von Rollen zum Transport auf dem Reiseweg der Maschine um ein am Gestell (10) befestigtes Gelenk angewinkelt sind.
